(19) Europäisches Patentamt / European Patent Office / Office européen des brevets

(11) **EP 4 725 746 A1**

(12) **EUROPEAN PATENT APPLICATION**
published in accordance with Art. 153(4) EPC

(43) Date of publication:
**15.04.2026 Bulletin 2026/16**

(21) Application number: 24857676.1

(22) Date of filing: **01.03.2024**

(51) International Patent Classification (IPC):
**B60L 15/20** $^{(2006.01)}$ **B60L 50/60** $^{(2019.01)}$

(86) International application number:
**PCT/CN2024/079624**

(87) International publication number:
**WO 2025/044121 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.08.2023 CN 202311091876**

(71) Applicant: **Huawei Digital Power Technologies
Co., Ltd.
Shenzhen, Guangdong 518043 (CN)**

(72) Inventors:
• **YANG, Peng**
  **Shenzhen, Guangdong 518043 (CN)**
• **LU, Chunhong**
  **Shenzhen, Guangdong 518043 (CN)**
• **FENG, Ningbo**
  **Shenzhen, Guangdong 518043 (CN)**
• **CUI, Zhaoxue**
  **Shenzhen, Guangdong 518043 (CN)**

(74) Representative: **Gill Jennings & Every LLP
The Broadgate Tower
20 Primrose Street
London EC2A 2ES (GB)**

(54) **ELECTRIC-MOTOR CONTROLLER, ELECTRIC DRIVE SYSTEM, AND VEHICLE**

(57) This application provides a motor controller, a powertrain, and a vehicle, relates to the field of new energy vehicles, and may be used in a pure electric vehicle and a hybrid vehicle. The motor controller includes an inverter circuit and a control circuit, the inverter circuit includes three switching transistor bridge arms, two ends of each switching transistor bridge arm are configured to receive power supplied by a power battery, and a midpoint of each switching transistor bridge arm is configured to connect to a one-phase winding of three-phase windings of a motor. The control circuit controls, in response to that an absolute value of a torque requirement indicated by a torque signal is greater than or equal to a preset torque value, the inverter circuit to output a three-phase alternating current. The control circuit controls, in response to that a rotation speed of the motor is less than a first rotation speed value or greater than a second rotation speed value and that the absolute value of the torque requirement indicated by the torque signal is less than the preset torque value, a plurality of switching transistors in the inverter circuit to be cut off. Torque output effect that meets driving intent of a driver can be implemented without manual intervention, thereby reducing energy consumption of the motor, helping reduce energy consumption of the vehicle, and improving vehicle endurance mileage.

600

| S610: A control circuit 110 determines a rotation speed of a motor |
| --- |

↓

| S620: The control circuit 110 determines a torque requirement based on a torque signal |
| --- |

↓

| S630: The control circuit 110 determines whether conversion of the motor and the torque requirement meet a preset condition |
| --- |

↓

| S640: When a determining result is that the conversion of the motor and the torque requirement meet the preset condition, the control circuit 110 controls switching transistors in an inverter circuit to be cut off |
| --- |

FIG. 7

## Description

This application claims priority to Chinese Patent Application No. 202311091876.7, filed with the China National Intellectual Property Administration on August 28, 2023 and entitled "MOTOR CONTROLLER, ELECTRIC DRIVE SYSTEM, AND VEHICLE", which is incorporated herein by reference in its entirety.

## TECHNICAL FIELD

This application relates to the field of new energy vehicles, and more specifically, to a motor controller, an electric drive system, and a vehicle.

## BACKGROUND

With the popularization of new energy vehicles, electric energy consumption of vehicle motors becomes an important factor that restricts endurance mileage of the new energy vehicles. In the conventional technology, when receiving a torque signal of a vehicle control unit or the like, a motor controller supplies power to a motor based on a torque requirement indicated by the torque signal, so that the motor generates torque that meets the torque requirement.

However, driving situations are ever-changing and complex, and there is a case in which the torque requirement determined by the vehicle control unit or the like cannot reflect real torque requirement intent of a driver. For example, when a vehicle parks at idle on a flat road, because a gear is at a D gear, the vehicle control unit or the like sends the torque signal, but the driver does not need to drive the motor to output torque, resulting in unnecessary energy consumption. For another example, if the vehicle parks on a ramp, the motor outputs positive torque to prevent sliding. However, due to interaction between wheels and a hydraulic braking system, the positive torque dissipates in a form of heat, resulting in unnecessary energy consumption. For another example, the conventional technology provides a "weak energy recovery mode". In this mode, the motor provides a braking force. In this case, the motor can convert kinetic energy of the vehicle into electric energy, and when the vehicle needs to be driven, the electric energy is converted into the kinetic energy. However, in a sliding working condition, the driver does not need an obvious sense of braking. In this case, if the motor is enabled to work in the "weak energy recovery mode", energy that can be recovered through electric braking is limited, and efficiency is not 100% in an energy conversion process, resulting in unnecessary energy consumption.

Therefore, a technology that can reduce the energy consumption is urgently needed.

## SUMMARY

This application provides a motor controller, an electric drive system, and a vehicle, to reduce energy consumption and improve a vehicle endurance capability.

According to a first aspect, this application provides a motor controller. The motor controller includes an inverter circuit and a control circuit, the inverter circuit includes three switching transistor bridge arms, two ends of each switching transistor bridge arm are configured to receive power supplied by a power battery, a midpoint of each switching transistor bridge arm is configured to connect to three-phase windings of a motor. The control circuit is configured to: in response to that an absolute value of a torque requirement indicated by a torque signal is greater than or equal to a preset torque value, control the inverter circuit to output a three-phase alternating current. The control circuit is configured to: in response to that a rotation speed of the motor is less than a first rotation speed value or greater than a second rotation speed value and that the absolute value of the torque requirement indicated by the torque signal is less than the preset torque value, control a plurality of switching transistors in the inverter circuit to be cut off, where the second rotation speed is greater than the first rotation speed.

Whether the inverter circuit outputs the alternating current to the motor is controlled based on the rotation speed of the motor and the torque requirement, and then whether the motor outputs torque is controlled, so that the control on whether to output the torque can match actual control intent of a driver. For example, when the rotation speed of the motor is low and the torque requirement is small, it may be determined that the motor is currently in an idle state, and the motor is not required to provide positive torque. Further, the switching transistor in the inverter circuit may be cut off, thereby reducing energy consumption. For another example, when the rotation speed of the motor is high and the torque requirement is small, it may be determined that the motor is currently in a sliding state, and the motor is not required to provide negative torque that is used as a braking force. Further, a switch in the inverter circuit may be turned off, thereby reducing energy consumption.

In an implementation, the control circuit is configured to: in response to that duration in which the rotation speed of the motor is less than the first rotation speed value is greater than first duration and duration in which the absolute value of the torque requirement is less than the preset torque value is greater than second duration, the plurality of switching transistors in the inverter circuit to be cut off. The rotation speed of the motor and duration in which the torque requirement meets a preset condition are recorded, so that accuracy and reliability of determining the idle state can be improved, and practicability and safety of the solution provided in this application can be improved.

In another implementation, the control circuit is specifically configured to: in response to that duration in which the rotation speed of the motor is greater than the second rotation speed value is greater than third duration and duration in which the absolute value of the torque requirement is less than the preset torque value is greater than second duration, the plurality of switching transistors in the inverter circuit to be cut off. The rotation speed of the motor and duration in which the torque requirement meets a preset condition are recorded, so that accuracy and reliability of determining the sliding state can be improved, and practicability and safety of the solution provided in this application can be improved.

In yet another implementation, the control circuit is configured to: in response to that an absolute value of a change value of the rotation speed of the motor within preset time is greater than a preset rotation speed change value, control the inverter circuit to output the three-phase alternating current. When the rotation speed of the motor changes fast, it may be determined that the driver needs the motor to output the torque. In this case, the switching transistor in the inverter circuit is controlled to be conducted to output the alternating current to the motor, so that a requirement of the driver can be promptly met, and the practicability and the safety of the solution provided in this application are improved.

In yet another implementation, the control circuit is configured to: in response to that the absolute value of the torque requirement is greater than the preset torque value, control the inverter circuit to output the three-phase alternating current. When the absolute value of the torque requirement is large, it may be determined that the driver needs the motor to output the torque. In this case, the control circuit outputs the alternating current to the motor by controlling the switching transistor in the inverter circuit to be conducted, thereby driving the motor to generate the torque, so that the requirement of the driver can be promptly met, and the practicability and the safety of the solution provided in this application are improved.

A manner of stopping the inverter circuit from outputting the alternating current may be enumerated in the following: The control circuit controls the inverter circuit to cut off a switching transistor of each switching transistor bridge arm, to stop outputting the alternating current. Alternatively, the control circuit controls the inverter circuit to cut off switching transistors of some switching transistor bridge arms, to stop outputting the alternating current. In other words, "controlling the plurality of switching transistors in the inverter circuit to be cut off" may be understood as: controlling all switching transistors in the inverter circuit to be cut off, or controlling some switching transistors in the inverter circuit to be cut off.

In an implementation, the control circuit is configured to receive a rotation speed signal from the motor, where information indicated by the rotation speed signal includes a rotation speed value of the motor. Therefore, the control circuit can determine the rotation speed of the motor based on the rotation speed signal.

In an implementation, the torque requirement may be obtained through calculation by the control circuit based on a signal like an accelerator signal or a brake signal. In other words, the control circuit is configured to receive the accelerator signal triggered by an accelerator pedal or the brake signal triggered by a brake pedal, and the accelerator signal or the brake signal is used to determine a value of the torque requirement. A direction of a torque requirement indicated by a torque signal corresponding to the accelerator signal is opposite to a direction of a torque requirement indicated by a torque signal corresponding to the brake signal. Specifically, the direction of the torque requirement indicated by the torque signal corresponding to the accelerator signal is the same as a traveling direction of the vehicle, and the torque requirement indicated by the torque signal corresponding to the accelerator signal indicates the vehicle to travel forward. The direction of the torque requirement indicated by the torque signal corresponding to the brake signal is opposite to the traveling direction of the vehicle, and the torque requirement indicated by the torque signal corresponding to the brake signal indicates the vehicle to brake.

In another implementation, the torque requirement may be obtained through calculation by a vehicle control unit, electronic stability control, or the like based on the accelerator signal, the brake signal, or the like.

In this case, a communication end of the control circuit is configured to: connect to the electronic stability control, receive a torque signal sent by the electronic stability control, and indicate, by using the torque signal, a value obtained through calculation to the control circuit.

Alternatively, a communication end of the control circuit is configured to: connect to the vehicle control unit, and receive a torque signal sent by the vehicle control unit.

In this application, determining, based on the rotation speed of the motor and the torque requirement, that the inverter circuit outputs or stops outputting the direct current to the motor may alternatively be performed by the vehicle control unit. In other words, the vehicle control unit may determine the torque requirement based on the accelerator signal or the brake signal, determine, based on the torque requirement and the rotation speed of the motor, whether the motor is required to output the torque (or whether the inverter circuit is required to output the alternating current to the motor), and send a determining result to the control circuit, that is, the control circuit is configured to receive a control signal from the vehicle control unit. The control signal indicates the switching transistor in the inverter circuit to be conducted or cut off.

In an implementation, the communication end of the control circuit is configured to connect to the vehicle control unit, and the control circuit is configured to receive a vehicle driving status signal sent by the vehicle control unit. The vehicle driving status signal is used by the control circuit to obtain the torque signal. To be specific, the foregoing lists a solution of determining the torque requirement based on the brake signal or the accelerator signal. However, this application is not limited thereto. For example, the torque requirement may be further determined based on the vehicle driving status signal from the vehicle control unit, and the vehicle driving status signal may include one or more of the following signals to determine the torque requirement: a gear signal, a vehicle speed signal, a driving mode signal, an energy feedback mode signal, and the like.

According to a second aspect, this application provides an electric drive system. The electric drive system includes a motor and a motor controller, the motor controller includes a control circuit and an inverter circuit, the motor receives an alternating current from the inverter circuit, the inverter circuit includes three switching transistor bridge arms, two ends of each switching transistor bridge arm are configured to receive power supplied by a power battery, and a midpoint of each switching transistor bridge arm is configured to connect to a one-phase winding of three-phase windings of the motor. The control circuit is configured to: in response to that an absolute value of a torque requirement indicated by a torque signal is greater than or equal to a preset torque value, control the inverter circuit to output the alternating current. The control circuit is configured to: in response to that a rotation speed of the motor is less than a first rotation speed value or greater than a second rotation speed value and that the absolute value of the torque requirement indicated by the torque signal is less than the preset torque value, control a plurality of switching transistors in the inverter circuit to be cut off, where the second rotation speed is greater than the first rotation speed.

In an implementation, the control circuit is further configured to: in response to that duration in which the rotation speed of the motor is less than the first rotation speed value is greater than first duration and duration in which the absolute value of the torque requirement indicated by the torque signal is less than the preset torque value is greater than second duration, the plurality of switching transistors in the inverter circuit to be cut off.

In another implementation, the control circuit is further configured to: in response to that duration in which the rotation speed of the motor is greater than the second rotation speed value is greater than third duration and duration in which the absolute value of the torque requirement indicated by the torque signal is less than the preset torque value is greater than second duration, the plurality of switching transistors in the inverter circuit to be cut off.

In an implementation, the control circuit is further configured to: in response to that an absolute value of a change value of the rotation speed of the motor within preset time is greater than a preset rotation speed change value, control the inverter circuit to output the three-phase alternating current.

In an implementation, the control circuit is further configured to: in response to that the absolute value of the torque requirement indicated by the torque signal is greater than the preset torque value, control the inverter circuit to output the three-phase alternating current.

In this application, determining, based on the rotation speed of the motor and the torque requirement, that the inverter circuit outputs or stops outputting a direct current to the motor may be performed by the control circuit in the motor controller. In other words, the motor controller further includes the control circuit, and the control circuit is configured to control the switching transistor in the inverter circuit to be conducted or cut off, so that the inverter circuit outputs or stops outputting the alternating current.

In this case, the control circuit is configured to receive a rotation speed signal from the motor, where the rotation speed signal includes a rotation speed value of the motor.

In an implementation, the torque requirement may be obtained through calculation by the control circuit based on a signal like an accelerator signal or a brake signal. In other words, the control circuit is configured to receive the accelerator signal triggered by an accelerator pedal or the brake signal triggered by a brake pedal, and the accelerator signal or the brake signal is used to determine a value of the torque requirement.

In another implementation, the torque requirement may be obtained through calculation by a vehicle control unit or the like based on the accelerator signal, the brake signal, or the like, and a value obtained through calculation is indicated to the control circuit by using the torque signal, that is, the control circuit is configured to receive a torque signal from the vehicle control unit, where the torque signal includes the value of the torque requirement.

In this application, determining, based on the rotation speed of the motor and the torque requirement, whether to cut off the plurality of switching transistors in the inverter circuit may alternatively be performed by the vehicle control unit. In other words, the vehicle control unit may determine the torque requirement based on the accelerator signal or the brake signal, determine, based on the torque requirement and the rotation speed of the motor, whether the motor is required to output torque (or whether the inverter circuit is required to output the alternating current to the motor), and send a determining result to the control circuit, that is, the control circuit is configured to receive a control signal from the vehicle control unit. The control signal indicates the switching transistor in the inverter circuit to be conducted or cut off.

According to a third aspect, a vehicle is provided. The vehicle includes a power battery and an electric drive system, the electric drive system includes a motor controller and a motor, the motor controller includes a controller and an inverter circuit, the motor is connected to an output end of the inverter circuit, the power battery is connected to an input end of the inverter circuit, the inverter circuit includes three switching transistor bridge arms, two ends of each switching transistor bridge arm are configured to receive power supplied by the power battery, and a midpoint of each switching transistor bridge arm is configured to connect to a one-phase winding of three-phase windings of the motor. A control circuit is configured to: in response to that an absolute value of a torque requirement indicated by a torque signal is greater than or equal to a preset torque value, control the inverter circuit to output an alternating current. The control circuit is configured to: in response to that a rotation speed of the motor is less than a first rotation speed value or greater than a second rotation speed value and that the absolute value of the torque requirement is less than the preset torque value, control a plurality of switching transistors in the inverter circuit to be cut off, where the second rotation speed is greater than the first rotation speed.

**In** this application, determining, based on the rotation speed of the motor and the torque requirement, whether to cut off the plurality of switching transistors in the inverter circuit may be performed by the control circuit in the motor controller.

**In** an implementation, the torque requirement may be obtained through calculation by the control circuit based on a signal like an accelerator signal or a brake signal.

**In** another implementation, the torque requirement may be obtained through calculation by a vehicle control unit or the like based on the accelerator signal, the brake signal, or the like, and a value obtained through calculation is indicated to the control circuit by using the torque signal.

Alternatively, determining, based on the rotation speed of the motor and the torque requirement, whether to cut off the plurality of switching transistors in the inverter circuit may alternatively be performed by the vehicle control unit. In other words, the vehicle control unit may determine the torque requirement based on the accelerator signal or the brake signal, determine, based on the torque requirement and the rotation speed of the motor, whether the motor is required to output torque, and send a determining result to the control circuit.

## BRIEF DESCRIPTION OF DRAWINGS

FIG. 1 is a diagram of a scenario of a vehicle according to an embodiment of this application;
FIG. 2 is a diagram of a structure of an electric drive system according to an embodiment of this application;
FIG. 3 is a diagram of a connection structure of a motor controller according to an embodiment of this application;
FIG. 4 is a diagram of a structure of an example of a vehicle according to an embodiment of this application;
FIG. 5 is a diagram of an example of a communication architecture of a vehicle according to an embodiment of this application;
FIG. 6 is a schematic flowchart of an example of a motor control method according to an embodiment of this application;
FIG. 7 is a schematic flowchart of another example of a motor control method according to an embodiment of this application;
FIG. 8 is a schematic flowchart of yet another example of a motor control method according to an embodiment of this application; and
FIG. 9 is a schematic flowchart of yet another example of a motor control method according to an embodiment of this application.

## DESCRIPTION OF EMBODIMENTS

The following describes the technical solutions in embodiments of this application with reference to the accompanying drawings. It is clearly that the described embodiments are some but not all of embodiments of this application. All other embodiments obtained by a person of ordinary skill in the art based on embodiments of this application without creative efforts shall fall within the protection scope of this application.

With the popularization of new energy vehicles, electric energy consumption of the vehicles becomes an important factor that restricts endurance mileage of the new energy vehicles. Generally, when a new energy vehicle parks, a motor that provides a driving force for the vehicle keeps being in a working state of sending a PWM driver gating signal, and continuously consumes electric energy. "Sending a PWM driver gating signal" may also be referred to as "transistor conducting" or "wave transmission", and means driving a switch in an inverter circuit to be turned on, to output an alternating current to the motor. The opposite of "sending a PWM driver gating signal" is "stopping sending a PWM driver gating signal". "Stopping sending a PWM driver gating signal" may also be referred to as "transistor cut-off", "stopping sending a PWM driver gating signal", or "stopping wave transmission", and means driving the switch in the inverter circuit to be turned off, to stop outputting the alternating current to the motor.

For example, when the vehicle is in an idle working condition, because a driver steps on a brake pedal, a vehicle control unit (vehicle control unit, VCU) has no driving torque requirement for the motor, but when the motor is in a working state of sending a PWM driver gating signal, a power battery still needs to transmit electric energy to a microcontroller unit (microcontroller unit, MCU), and the electric energy is continuously consumed.

For another example, when the vehicle parks at idle on a ramp, even if the driver steps on the brake pedal, the vehicle control unit still sends a torque request to the microcontroller unit, so that the motor outputs positive torque, to ensure that after the driver releases the brake pedal, the vehicle has forward torque without sliding backward. However, the positive torque output by the motor dissipates in a form of heat due to interaction between a hydraulic braking system and wheels when the vehicle is in a parking state. This also causes waste of electric energy.

For another example, when the new energy vehicle slides at a specific speed, if the driver selects "weak energy recovery" of the vehicle, the vehicle control unit still sends a torque request to the microcontroller unit, so that the motor provides small power generation torque for feeding back energy. However, when the vehicle is in a sliding working condition, the driver does not expect the vehicle to have an obvious sense of braking. Therefore, energy that can be recovered through electric braking is limited, and energy conversion (for example, conversion between kinetic energy and the electric energy) is performed in an energy recovery process for a plurality of times. This also causes waste and loss of energy.

In view of this, this application provides a motor controller, an electric drive system, and a vehicle. The motor controller provided in this application cuts off or conducts a switching transistor in the inverter circuit based on an actual running status of the vehicle, to reduce energy consumption of the inverter circuit, help reduce energy consumption, improve a vehicle endurance capability, and control the switching transistor in the inverter circuit to be cut off.

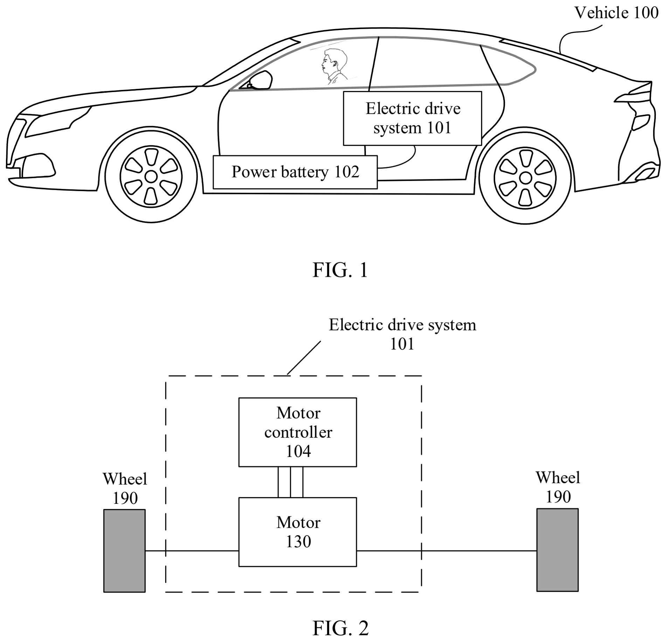

FIG. 1 is a diagram of a scenario of a vehicle according to an embodiment of this application. Refer to FIG. 1. A vehicle 100 includes an electric drive system 101 and a power battery 102 connected to the electric drive system 101. The power battery 102 provides electric energy for the electric drive system 101. The electric drive system 101 receives the electric energy from the power battery 102 and provides kinetic energy for the vehicle 100.

A structure of the electric drive system 101 may be shown in FIG. 2. The electric drive system 101 includes a motor controller 104 and a motor 130. The motor 130 is in transmission connection with wheels 190 of the vehicle 100. In a traveling process of the vehicle 100, the motor 130 is configured to drive the wheels 190.

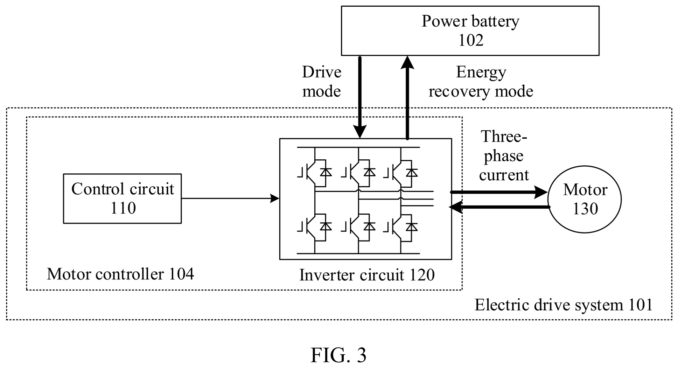

FIG. 3 is a running diagram of the electric drive system 101. As shown in FIG. 3, running modes of the electric drive system 101 include a drive mode and an energy recovery mode. Specifically, the electric drive system 101 is in the drive mode, and an inverter circuit 120 receives power supplied by the power battery 102 and converts a direct current from the power battery 102 into a three-phase alternating current to drive the motor 130. That the electric drive system 101 is in the energy recovery mode means that when the vehicle 100 is in a braking state, the wheels 190 drive the motor 130 to rotate, to drive the motor 130 to run in a power generation state and output negative torque, drive the motor 130 to convert the kinetic energy of the vehicle 100 into the electric energy, and drive the motor 130 to provide a feedback braking force for the vehicle 100 during power generation.

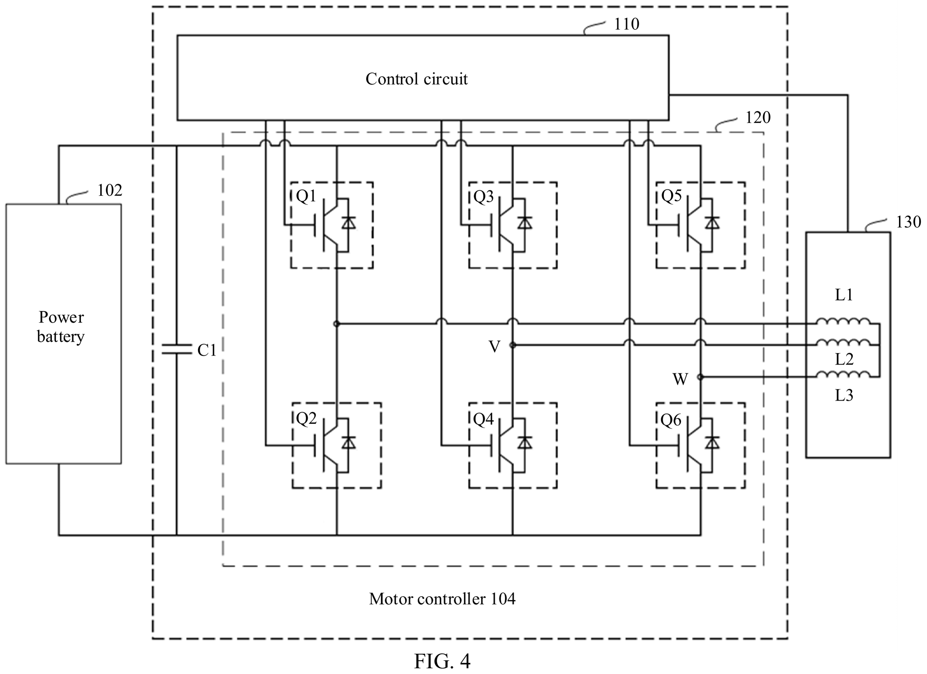

FIG. 4 is a specific diagram of a structure of a motor controller. As shown in FIG. 4, the motor controller 104 includes a control circuit 110 and the inverter circuit 120. The inverter circuit 120 includes three switching transistor bridge arms, two ends of each switching transistor bridge arm are configured to receive the power supplied by the power battery 102, and a midpoint of each switching transistor bridge arm is configured to connect to a one-phase winding of three-phase windings of the motor 130. The inverter circuit 120 is configured to: when the electric drive system 101 is in the drive mode, convert the direct current from the power battery 102 into the three-phase alternating current, and supply power to the motor 130. Alternatively, the inverter circuit 120 is configured to: when the electric drive system 101 is in the energy recovery mode, convert the alternating current from the motor 130 into the direct current, and charge the power battery 102. The control circuit 110 is configured to send a control signal to the inverter circuit 120 to control running of the inverter circuit 120.

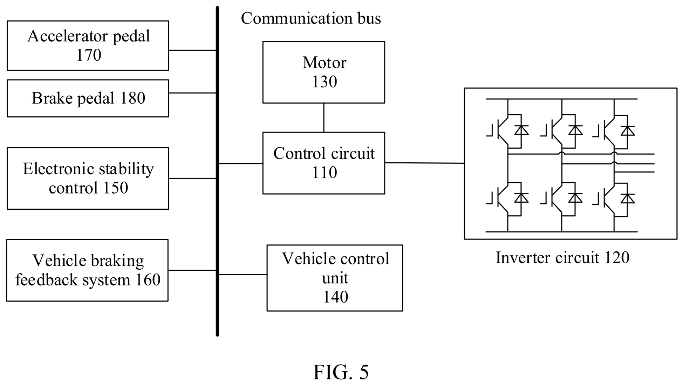

FIG. 5 is a diagram of a communication architecture of the vehicle 100. As shown in FIG. 5, a communication end of the control circuit 110 is connected to a communication bus, and the control circuit 110 may establish communication with another component (for example, an accelerator pedal 170, a brake pedal 180, electronic stability control 150, a vehicle braking feedback system 160, and a vehicle control unit 140) in the vehicle 100. In other words, the control circuit 110 may directly obtain a signal, for example, a vehicle driving status signal, a torque requirement signal, a gear signal, a driving mode, an energy feedback mode, an accelerator signal, and a brake signal, from the communication bus. The control circuit 110 may also upload a signal, for example, an actual torque signal of the motor 130 and a current of the inverter circuit 120, to the communication bus.

For example, the communication bus may be a controller area network (controller area network, CAN) bus or an in-vehicle network (FlexRay) bus. When the communication bus is the CAN bus, a specific implementation of the communication bus may be a chassis CAN bus of the vehicle 100.

A specific implementation of the control circuit 110 may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like.

An input end of the control circuit 110 is connected to a rotation speed detection apparatus, and the rotation speed detection apparatus is disposed on a rotating shaft of the motor 130. In this case, the control circuit 110 may receive a rotation speed signal or a resolver signal of the motor 130 from the rotation speed detection apparatus. For example, the rotation speed detection apparatus may be a resolver sensor or a rotation speed sensor. In addition, an output end of the control circuit 110 is connected to a control end of the inverter circuit 120. The control circuit 110 provided in embodiments of this application is configured to: receive the torque signal, and control the inverter circuit 120 to drive the motor 130 to generate a torque value indicated by the torque signal. The torque signal indicates a torque requirement of the vehicle 100.

In an embodiment, the communication end of the control circuit is configured to connect to the electronic stability control 140, and the vehicle control unit 140 sends the torque signal to the control circuit 110. The vehicle control unit 140 determines the torque requirement of the vehicle based on a running status of the vehicle 100, and sends the torque signal to the control circuit 110.

In an embodiment, the communication end of the control circuit 110 is configured to: connect to the electronic stability control 150, and receive the torque signal sent by the electronic stability control 150.

In an embodiment, the control circuit 110 is configured to receive the accelerator signal generated by triggering the accelerator pedal. The accelerator signal is used to generate a torque signal, and a torque requirement indicated by the torque signal corresponding to the accelerator signal is positive torque.

In an embodiment, the control circuit 110 is configured to receive the brake signal generated by triggering the brake pedal. The brake signal is used to generate a torque signal, and a torque requirement indicated by the torque signal corresponding to the brake signal is negative torque. Specifically, the control circuit 110 responds to the torque signal corresponding to the brake signal, the control circuit 110 is configured to control the motor 130 to run in an energy recovery state, and the motor 130 is configured to generate the alternating current. In this process, torque corresponding to the motor 130 is the negative torque, and the motor 130 provides the feedback braking force for the vehicle 100.

In an embodiment, the control circuit 110 may determine, based on a rotation speed of the motor 130 and the torque signal, whether to control a plurality of switching transistors in the inverter circuit 120 to be cut off. Specifically, the control circuit 110 determines whether the rotation speed of the motor 130 and the torque signal meet a first preset condition. If the first preset condition is met, the control circuit 110 determines that the plurality of switching transistors in the inverter circuit 120 can be controlled to be cut off. The first preset condition may be that the rotation speed of the motor 130 is less than a first rotation speed value or greater than a second rotation speed value, and an absolute value of the torque requirement indicated by the torque signal is less than a preset torque value. The second rotation speed is greater than the first rotation speed.

In an embodiment, the control circuit 110 may control the current output by the inverter circuit 120 to the motor 130, to control the rotation speed or torque of the motor 130. For example, when the control circuit 110 determines that the rotation speed of the motor 130 and the torque signal do not meet the first preset condition, the control circuit 110 may control, based on the received torque signal, a value of the alternating current output by the inverter circuit 120 to the motor 130, to control an output torque of the motor 130. The torque signal may be determined by the control circuit 110 based on other signals, for example, the accelerator signal and the brake signal. The accelerator signal is generated in response to stepping on the accelerator pedal by a driver, and the brake signal is generated in response to stepping on the brake pedal by the driver. In this case, the control circuit 110 receives the corresponding accelerator signal or brake signal from the accelerator pedal or the brake pedal. The torque signal is obtained by the control circuit 110 from a torque calculation module, and the torque signal is obtained through calculation by the torque calculation module based on the accelerator signal, the brake signal, or the vehicle driving status signal. The torque calculation module includes but is not limited to the vehicle control unit, the electronic stability control, and the like.

It may be understood that the control circuit 110 may alternatively receive the accelerator signal or the brake signal from the torque calculation module. The torque calculation module includes but is not limited to components such as the vehicle control unit and the electronic stability control. This is not limited in this application.

After receiving the torque signal, the control circuit 110 may adjust the output current of the inverter circuit 120 based on the torque value indicated by the torque signal, to adjust the output torque of the motor 130.

It should be noted that ports in the control circuit 110 include the input end, the output end, and the communication end. The input end, the output end, and the communication end in embodiments of this application may be specifically implemented as any one of a plurality of ports. Alternatively, one port may have input, output, and communication functions at the same time. In this case, at least one of the input end, the output end, and the communication end in embodiments of this application may be specifically implemented as a same port, or may be specifically implemented as different ports. Alternatively, the communication port may be used as a simple input single-open port or an output port. To be specific, connections between the input end, the output end, and the communication end in embodiments of this application and other components are divided only by functions, and are not limited to specific ports in actual application.

For example, the inverter circuit 120 may be a three-phase two-level inverter, a three-phase three-level inverter, or a three-phase multi-level inverter. In other words, a specific implementation of the inverter circuit 120 is not limited in embodiments of this application, provided that the direct current output by the power battery 102 can be converted into the alternating current that drives the motor 130 to work.

With reference to the accompanying drawings, the following describes, by using an example, how the control circuit 110 in embodiments of this application specifically determines whether the plurality of switching transistors in the inverter circuit 120 can be controlled to be cut off.

In an embodiment of this application, the input end of the control circuit 110 is connected to the rotation speed detection apparatus (not shown in the figure), and the rotation speed detection apparatus is disposed on the rotating shaft of the motor 130. For example, the rotation speed detection apparatus is specifically implemented as the resolver sensor, and the control circuit 110 receives the resolver signal of the resolver sensor based on a preset time period. For example, the resolver signal may include a sine signal $\sin\alpha$ and a cosine signal $\cos\alpha$, where $\alpha$ is an angle at which the motor 130 has rotated. The preset time period may be understood as a sampling period of the control circuit 110, that is, the control circuit 110 collects the sine signal $\sin\alpha$ and the cosine signal $\cos\alpha$ of the resolver sensor in real time. The control circuit 110 obtains the angle $\alpha$ through calculation based on a ratio of the sine signal $\sin\alpha$ to the cosine signal $\cos\alpha$. The control circuit 110 further obtains, through calculation, the rotation speed n of the motor 130 based on the angle $\alpha$ and time t used by the motor 130 to rotate by the angle $\alpha$. A formula may be expressed as:

$$N=\alpha/2\pi t \quad (1)$$

In an embodiment, the control circuit 110 may directly obtain and receive a transistor cut-off indication signal from the vehicle control unit 140, and control, based on the transistor cut-off indication signal, the plurality of switching transistors in the inverter circuit 120 to be cut off. The transistor cut-off signal is generated by the vehicle control unit 140 in response to the rotation speed of the motor 130 being less than the first rotation speed value or greater than the second rotation speed value, and the absolute value of the torque requirement indicated by the torque signal being less than the preset torque value. The vehicle control unit 140 obtains the rotation speed of the motor 130 from the motor controller 104 through the communication bus, and obtains the torque signal from another module through the communication bus or generates the torque signal through calculation. According to the method in embodiments, the motor controller 104 cuts off the switching transistor in the inverter circuit 120 based on an indication of the vehicle control unit 140, to minimize energy consumption of the motor 130, help reduce vehicle energy consumption, and improve vehicle endurance mileage. In addition, the motor controller 104 does not need to analyze a vehicle driving status, and this helps reduce running load of the motor controller 104.

In an embodiment, the control circuit 110 may obtain the torque signal and the rotation speed of the motor 130, determine that the torque signal and the rotation speed of the motor 130 meet the first preset condition, and control the plurality of switching transistors in the inverter circuit 120 to be cut off. The first preset condition includes but is not limited to the following two conditions: (1) The rotation speed of the motor is less than the first rotation speed value, and the absolute value of the torque requirement indicated by the torque signal is less than the preset torque value. (2) The rotation speed of the motor is greater than the second rotation speed value, and the absolute value of the torque requirement indicated by the torque signal is less than the preset torque value. The second rotation speed is greater than the first rotation speed.

During specific implementation, the control circuit 110 first determines a driving working condition of the vehicle 100 based on the torque signal and the rotation speed of the motor 130.

In a specific implementation, the control circuit 110 is configured to: when determining that duration in which the rotation speed of the motor 130 is less than the first rotation speed value is greater than first duration and duration in which the absolute value of the torque requirement indicated by the torque signal is less than the preset torque value is greater than second duration, control the plurality of switching transistors in the inverter circuit 120 to be cut off.

When the rotation speed of the motor 130 is less than the first rotation speed value is greater than the first duration and the duration in which the absolute value of the torque requirement indicated by the torque signal is less than the preset torque value is greater than the second duration, it may be determined that the driving working condition of the vehicle 100 is an idle working condition. The idle working condition is usually defined as that when the vehicle is in a D gear, the driver steps on the brake pedal to park the vehicle in place, and the vehicle is not powered off and can move forward at any time. The control circuit 110 may obtain the vehicle driving status signal from the vehicle control unit 140. The vehicle driving status signal includes but is not limited to the torque signal, the gear signal, the driving mode, the energy feedback mode, the accelerator signal, the brake signal, and the like. Therefore, the control circuit 110 may further determine the driving working condition of the vehicle 100 based on the vehicle driving status signal. For example, the control circuit 110 determines, based on whether a gear of the vehicle 100 is a preset gear (for example, the D gear), whether the driving working condition of the vehicle 100 is the idle working condition. In other words, the driving working condition of the vehicle 100 may be the idle working condition only when the gear of the vehicle 100 is the preset gear (for example, the D gear). For another example, it is determined, based on whether the driving mode of the vehicle 100 is a non-performance mode or a non-sport mode, whether the driving working condition of the vehicle 100 is the idle working condition. In other words, the driving working condition of the vehicle 100 may be the idle working condition only when the driving mode of the vehicle 100 is the non-performance mode or the non-sport mode. Embodiments are implemented. When determining that the vehicle is in the idle working condition based on the torque signal and the rotation speed of the motor, the motor controller controls the switching transistor in the inverter circuit to be cut off, to achieve effect of automatic transistor cut-off by the motor controller without manual intervention. This reduces the energy consumption of the motor, helps reduce the vehicle energy consumption, and improves the vehicle endurance.

In another implementation, the control circuit 110 controls, when determining that duration in which the rotation speed of the motor 130 is greater than the second rotation speed value is greater than third duration and duration in which the absolute value of the torque requirement indicated by the torque signal is less than the preset torque value is greater than second duration, the plurality of switching transistors in the inverter circuit 120 to be cut off. When the rotation speed of the motor 130 is greater than the second rotation speed value is greater than the third duration and the duration in which the absolute value of the torque requirement indicated by the torque signal is less than the preset torque value is greater than the second duration, the control circuit 110 may determine that the driving working condition of the vehicle 100 is a sliding working condition. The sliding working condition is generally defined as a state in which the vehicle 100 is moving forward, a speed of the vehicle is greater than or equal to a specific preset value, and the motor 130 is driven to rotate with the wheels 190. The control circuit 110 may obtain the vehicle driving status signal from the vehicle control unit 140. The vehicle driving status signal includes but is not limited to the torque signal, the gear signal, the driving mode, the energy feedback mode, the accelerator signal, the brake signal, a speed signal, and the like. Therefore, the control circuit 110 may further determine the driving working condition of the vehicle 100 based on the vehicle driving status signal. For example, the control circuit 110 determines, based on whether the speed of the vehicle 100 is greater than a preset speed threshold, whether the driving working condition of the vehicle 100 is the sliding working condition. In other words, the driving working condition of the vehicle 100 may be the sliding working condition only when a gear of the vehicle 100 is greater than the preset speed threshold. For another example, the control circuit determines, based on whether a change value of the speed of the vehicle 100 within preset time is less than a preset speed change value, whether the driving working condition of the vehicle 100 is the sliding working condition. In other words, the driving working condition of the vehicle 100 may be the sliding working condition only when the change value of the speed of the vehicle 100 is less than the preset speed change value. Embodiments are implemented. When determining that the vehicle is in the sliding working condition based on the torque signal and the rotation speed of the motor, the motor controller controls the switching transistor in the inverter circuit to be cut off, to achieve effect of automatic transistor cut-off by the motor controller without manual intervention. This reduces the energy consumption of the motor, helps reduce the vehicle energy consumption, and improves the vehicle endurance.

In an embodiment, after controlling the plurality of switching transistors in the inverter circuit 120 to be cut off, the control circuit 110 sends the actual torque signal of the motor 130 to the vehicle control unit 140. The actual torque signal of the motor 130 indicates a torque value actually generated by the motor 130. In embodiments of this application, the actual torque signal of the motor 130 may be different from the torque value indicated by the torque signal. In addition, the vehicle control unit 140 does not send a warning signal to the driver in response to that the torque value indicated by the actual torque signal of the motor is different from the torque value indicated by the torque signal. In this way, when the motor controller controls the plurality of switching transistors in the inverter circuit to be cut off to save energy of the vehicle, the vehicle control unit does not send an alarm signal to the driver. This helps simplify an operation of the driver and improve driving experience of the driver.

The control circuit 110 may further send working information of the motor 130 to the vehicle control unit 140. The working information includes but is not limited to the rotation speed of the motor 130, whether the motor 130 is in an intelligent transistor cut-off mode (the intelligent transistor cut-off mode is a mode in which the control circuit 110 can control the plurality of switching transistors in the inverter circuit 120 to be cut off), whether the motor 130 is in a transistor cut-off state (the transistor cut-off state means that the plurality of switching transistors in the inverter circuit 120 are in the cut-off state), and the like.

In an embodiment, in a specific working condition, the vehicle control unit 140 may further send an inhibit transistor cut-off indication signal to the control circuit 110. The inhibit transistor cut-off indication signal indicates the control circuit 110 to inhibit the plurality of switching transistors in the inverter circuit 120 from being controlled to be cut off. For example, when the driver switches the driving mode of the vehicle 100 to the sport mode or the performance mode, the vehicle control unit 140 sends the inhibit transistor cut-off indication signal to the control circuit 110, to ensure driving performance of the vehicle and the driving experience of the driver. For another example, when learning that the vehicle 100 is faulty, the vehicle control unit 140 sends the inhibit transistor cut-off indication signal to the control circuit 110, to ensure safety performance of the vehicle.

In an embodiment, FIG. 5 is a diagram of a structure of an example of a vehicle according to an embodiment of this application. In the diagram of the structure of the vehicle 100 shown in FIG. 5, the vehicle 100 includes the electric drive system shown in FIG. 3. In addition, the vehicle 100 further includes electronic stability control 150, a vehicle braking feedback system 160, an accelerator pedal 170, and a brake pedal 180.

In an embodiment of this application, after the control circuit 110 controls the plurality of switching transistors in the inverter circuit 120 to be cut off, the control circuit 110 may further detect a working condition of the vehicle 100 in real time, to determine whether the driver has the torque requirement for the vehicle 100. After determining that the driver has the torque requirement for the vehicle 100, the control circuit 110 may further control the plurality of switching transistors in the inverter circuit 120 to be conducted.

In an embodiment, the control circuit 110 may directly obtain and receive a transistor conducting indication signal from the vehicle control unit 140, and control, based on the transistor conducting indication signal, the plurality of switching transistors in the inverter circuit 120 to be conducted. The transistor conducting indication signal is generated by the vehicle control unit 140 in response to an absolute value of a change value of the rotation speed of the motor 130 within preset time being greater than a preset rotation speed change value or the absolute value of the torque requirement indicated by the torque signal being greater than the preset torque value. The vehicle control unit 140 obtains the rotation speed of the motor 130 from the motor controller 104 through the communication bus, and obtains the torque signal from another module through the communication bus or generates the torque signal through calculation. According to the method in embodiments, the motor controller quickly conducts the switching transistor in the inverter circuit based on an indication of the vehicle control unit, to meet the torque requirement of the driver for the vehicle. In addition, the motor controller does not need to analyze a vehicle driving status, and this helps reduce running load of the motor controller.

In an embodiment, the control circuit 110 may obtain the torque signal and the rotation speed of the motor 130, determine that the torque signal and the rotation speed of the motor 130 meet a second preset condition, and control the plurality of switching transistors in the inverter circuit 120 to be conducted. The second preset condition includes but is not limited to the following two conditions: (1) The absolute value of the change value of the rotation speed of the motor 130 within the preset time is greater than the preset rotation speed change value. (2) The absolute value of the torque requirement indicated by the torque signal is greater than the preset torque value.

In an embodiment, the control circuit 110 continuously obtains rotation speeds of the motor 130. When the absolute value of the change value of the rotation speed of the motor 130 within the preset time is greater than the preset rotation speed change value, the control circuit 110 determines that the vehicle 100 has the actual torque requirement, and the control circuit 110 controls the plurality of switching transistors in the inverter circuit 120 to be conducted, to provide the torque for the vehicle. In this way, when the vehicle has the torque requirement, the motor controller controls the plurality of switching transistors in the inverter circuit to be conducted, and outputs a current to the motor, to achieve effect of automatic transistor conducting by the motor without manual intervention. This meets the power torque requirement of the driver for the vehicle, and improves safety and reliability of vehicle control.

In an embodiment, the control circuit 110 continuously obtains torque signals. When the absolute value of the torque requirement indicated by the torque signal is greater than the preset torque value, the control circuit 110 determines that the vehicle 100 has the torque requirement, and the control circuit 110 controls the plurality of switching transistors in the inverter circuit 120 to be conducted, to provide the torque for the vehicle. In this way, when the vehicle has the actual torque requirement, the motor controller controls the plurality of switching transistors in the inverter circuit to be conducted, and outputs a current to the motor, to achieve effect of automatic transistor conducting by the motor without manual intervention. This meets the power torque requirement of the driver for the vehicle, and improves safety and reliability of vehicle control.

In a specific implementation, the communication end of the control circuit 110 is configured to connect to the electronic stability control 150. When the electronic stability control 150 detects that the vehicle 100 is unstable (for example, sliding downhill) and emergency braking is required, the electronic stability control 150 sends the torque signal to the control circuit 110. Correspondingly, the control circuit 110 receives the torque signal from the electronic stability control 150. The control circuit 110 determines the torque requirement indicated by the torque signal. When the absolute value of the torque requirement indicated by the torque signal is greater than the preset torque value, the control circuit 110 determines that the vehicle 100 has the actual torque requirement, and the control circuit 110 controls the plurality of switching transistors in the inverter circuit 120 to be conducted, to provide the torque for the vehicle 100. In this way, the electronic stability control sends the torque signal to the controller when the vehicle needs to accelerate or brake, or when there may be a risk of sliding in a parking state. The control circuit determines that the vehicle has the torque requirement after receiving the torque signal sent by the electronic stability control, and controls the plurality of switching transistors in the inverter circuit to be conducted, to achieve effect of automatic transistor conducting by the motor without manual intervention. This meets the power torque requirement of the driver for the vehicle, and improves safety and reliability of vehicle control.

In a specific implementation, the communication end of the control circuit 110 is configured to connect to the vehicle braking feedback system 160. When the vehicle braking feedback system 160 determines, in response to an operation of the driver, that the vehicle 100 has a vehicle braking feedback requirement and needs braking power, the vehicle braking feedback system 160 sends the torque signal to the control circuit 110. Correspondingly, the control circuit 110 receives the torque signal sent by the vehicle braking feedback system 160. Refer to the foregoing description. The control circuit 110 determines the torque requirement indicated by the torque signal. When the absolute value of the torque requirement indicated by the torque signal is greater than the preset torque value, the control circuit 110 determines that the vehicle 100 has the actual torque requirement, and the control circuit 110 controls the plurality of switching transistors in the inverter circuit 120 to be conducted, to provide the torque for the vehicle 100. In this way, the vehicle braking feedback system sends the torque signal to the control circuit after the driver enables a vehicle braking feedback mode. After receiving the torque signal sent by the vehicle braking feedback system, the controller determines that the vehicle has the vehicle braking feedback requirement, and controls the plurality of switching transistors in the inverter circuit to be conducted, to achieve effect of automatic transistor conducting by the motor without manual intervention. This meets the vehicle braking feedback requirement of the driver for the vehicle, and improves safety and reliability of vehicle control.

In a specific implementation, the input end of the control circuit 110 is configured to connect to the accelerator pedal 170. In response to the accelerator signal generated when the driver steps on the accelerator pedal 170, the control circuit 110 is further configured to: determine the torque signal based on the accelerator signal and the vehicle driving status signal, and determine the torque requirement indicated by the torque signal. When the absolute value of the torque requirement indicated by the torque signal is greater than the preset torque value, the control circuit 110 determines that the vehicle 100 has the actual torque requirement, and the control circuit 110 controls the plurality of switching transistors in the inverter circuit 120 to be conducted, to provide the torque for the vehicle 100. In this way, the motor controller directly receives the accelerator signal generated by triggering the accelerator pedal, and controls, based on the accelerator signal, the plurality of switching transistors in the inverter circuit to be quickly conducted, to achieve effect of automatic transistor conducting by the motor without manual intervention. This meets a driving requirement of the driver. In addition, an accelerator signal transmission link is short, to improve safety and reliability of vehicle control.

In a specific implementation, the input end of the control circuit 110 is configured to connect to the brake pedal 180. In response to the brake signal generated when the driver steps on the brake pedal 180, the control circuit 110 is further configured to: determine the torque signal based on the brake signal and the vehicle driving status signal, and determine the torque requirement indicated by the torque signal. When the absolute value of the torque requirement indicated by the torque signal is greater than the preset torque value, the control circuit 110 determines that the vehicle 100 has the actual torque requirement, and the control circuit 110 controls the plurality of switching transistors in the inverter circuit 120 to be conducted, to provide the torque for the vehicle 100. In this way, the motor controller directly receives the brake signal generated by triggering the brake pedal, and controls, based on the brake signal, the plurality of switching transistors in the inverter circuit to be quickly conducted, to achieve effect of automatic transistor conducting by the motor without manual intervention. This meets a driving requirement of the driver. In addition, a brake signal transmission link is short, to improve safety and reliability of vehicle control.

In embodiments of this application, the control circuit 110 may further adjust, based on an actual torque requirement value of the vehicle 100, a value of the current transmitted by the inverter circuit 120 to the motor 130, to avoid sense of impact on the vehicle, and enable the vehicle 100 to quickly respond to the torque requirement of the driver or the vehicle braking feedback requirement, to ensure the safety and reliability of the vehicle control.

During specific implementation, the control circuit 110 calculates, according to a relationship between an actual torque requirement value and a current and based on the actual torque requirement value of the vehicle 100, a current value corresponding to the actual torque requirement value. The relationship between torque and a current is shown in a formula (2):

$$T = 9550UI/n \text{ (2)}$$

T is the actual torque requirement value, U is a working voltage of the motor 130, namely, a voltage of the power battery 102, I is a working current of the motor 130, and n is the rotation speed of the motor 130.

The control circuit 110 controls the switching transistors in the inverter circuit 120 to be conducted or cut off, so that the output current of the inverter circuit 120 is a current corresponding to the actual torque requirement value. In this case, the output torque of the motor 130 is actual required torque. It should be understood that although a torque value corresponds to the current value, the control circuit 110 specifically controls the output current of the inverter circuit 120, and the torque value is output by the motor 130. Because control precision of the control circuit 110 is limited, the output current of the inverter circuit 120 may be greater than or less than a standard current value obtained through calculation. In this case, the torque value output by the motor 130 may be greater than or less than the actual torque requirement value.

In an embodiment, the control circuit 110 may periodically receive torque signals and vehicle driving status signals that are sent by other modules (for example, the vehicle control unit 140, the electronic stability control 150, the vehicle braking feedback system 160, the accelerator pedal 170, and the brake pedal 180) of the vehicle 100. Actual torque requirement values of the vehicle 100 are obtained through calculation based on periodically obtained rotation speed signals or resolver signals of the motor 130. In addition, the control circuit 110 may directly control the output current of the inverter circuit 120 based on a result obtained through calculation, to quickly control the output torque of the motor 130. In this way, continuous control is periodically performed to avoid the sense of impact on the vehicle, and ensure the safety and reliability of the vehicle control.

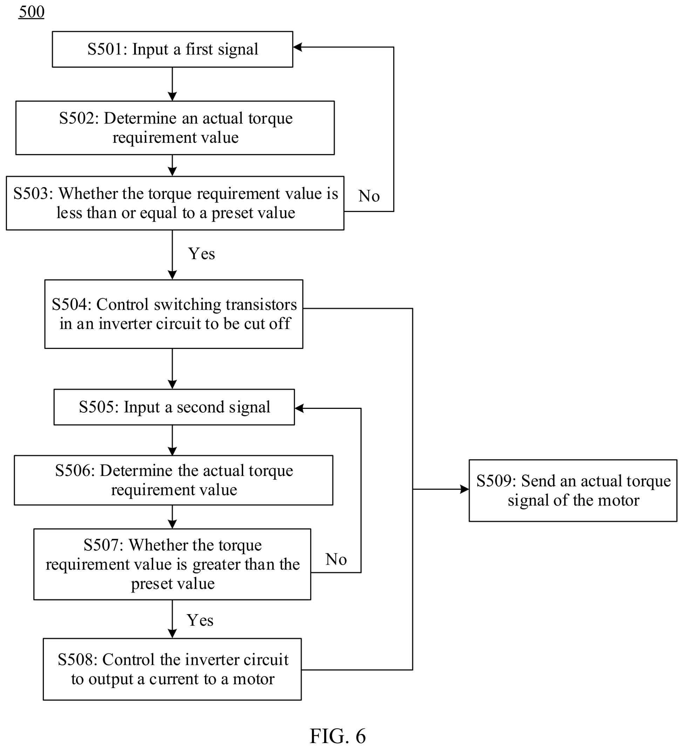

FIG. 6 is a schematic flowchart of a motor control method 500 according to an embodiment of this application. The method is applicable to the control circuit 110 in the motor controller 104. For specific structures and connection relationships of the motor controller 104 and the control circuit 110, refer to the foregoing descriptions. Details are not described herein again.

S501: Input a first signal.

The first signal includes a rotation speed signal and a torque signal of a motor, a resolver signal indicates a rotation speed of the motor, and the torque signal indicates a torque requirement of a vehicle. Optionally, the first signal may further include a vehicle driving status signal. The vehicle driving status signal is used to determine a driving working condition of the vehicle. The vehicle driving status signal includes but is not limited to a torque requirement signal, a gear signal, a driving mode, an energy feedback mode, an accelerator signal, a brake signal, and the like.

The resolver signal is obtained by a rotation speed detection apparatus connected to a control circuit, and the rotation speed detection apparatus is disposed on a rotor of the motor. The vehicle driving status signal is received by the control circuit from a communication bus. The communication bus is connected to a vehicle control unit, electronic stability control, a vehicle braking feedback system, a brake pedal, an accelerator pedal, and the like.

S502: Determine whether a first preset condition is met.

The first preset condition includes but is not limited to the following two conditions: (1) The rotation speed of the motor is less than a first rotation speed value, and an absolute value of the torque requirement indicated by the torque signal is less than a preset torque value. (2) The rotation speed of the motor is greater than a second rotation speed value, and the absolute value of the torque requirement indicated by the torque signal is less than the preset torque value. The second rotation speed is greater than the first rotation speed.

For a specific process in which the control circuit 110 determines, based on the torque signal and the rotation speed of the motor 130, whether the first preset condition is met, refer to the foregoing description. For brevity, details are not described herein again.

During specific implementation, when determining that the first preset condition is not met, that is, a determining result of S502 is no, the control circuit cyclically performs steps S501 and S502. When determining that the first preset condition is met, that is, the determining result of S502 is yes, the control circuit may continue to perform S503.

S503: Control a plurality of switching transistors in an inverter circuit to be cut off.

S504: Input a second signal.

The second signal may include a part or all of the first signal shown in step S501.

In an embodiment, the second signal may further include the torque requirement signal from the electronic stability control, the torque signal sent by the vehicle braking feedback system, the brake signal generated by the brake pedal in response to a driver operation, the accelerator signal generated by the accelerator pedal in response to a driver operation, and the like.

S505: Determine whether a second preset condition is met.

The second preset condition includes but is not limited to the following two conditions: (1) The absolute value of the change value of the rotation speed of the motor 130 within preset time is greater than a preset rotation speed change value. (2) The absolute value of the torque requirement indicated by the torque signal is greater than the preset torque value.

For a specific process in which the control circuit 110 determines, based on the torque signal and the rotation speed of the motor 130, whether the second preset condition is met, refer to the foregoing description. For brevity, details are not described herein again.

During specific implementation, when determining that the second preset condition is not met, that is, a determining result of S505 is no, the control circuit cyclically performs steps S504 and S505. When determining that the second preset condition is met, that is, the determining result of S505 is yes, the control circuit may continue to perform S506.

S506: Control the plurality of switching transistors in the inverter circuit to be conducted.

During specific implementation, the control circuit starts to output a current to the motor by controlling one or more of the plurality of switching transistors in the inverter circuit to be conducted.

In an embodiment, the control circuit obtains a target current through calculation according to the relationship between torque and a current shown in the foregoing formula (2) and based on an actual torque requirement value, and the control circuit controls the plurality of switching transistors in the inverter circuit to be conducted or cut off, so that the output current of the inverter circuit 120 is the target current, to control the torque output by the motor 130 to be the target torque.

S507: Send an actual torque signal of the motor.

During specific implementation, after controlling the plurality of switching transistors in the inverter circuit to be cut off or conducted, that is, after S503 or S506 is performed, the control circuit sends the actual torque signal of the motor to the vehicle control unit. The actual torque signal of the motor indicates a torque value actually generated by the motor.

It should be noted that, after the plurality of switching transistors in the inverter circuit in S503 are cut off, although the motor controller stops driving the motor, a rotor magnetic field of the motor does not disappear immediately, and a remaining rotor magnetic field generates an induced voltage on a stator winding of the motor. When it is determined in S505 that the switching transistor needs to be conducted to output an alternating current to the motor, because a power transistor of the inverter circuit has been cut off, the inverter circuit needs to be restarted. If the inverter circuit is directly started, a voltage difference exists between an output voltage at a bridge arm midpoint of the power transistor of the inverter circuit and the induced voltage of the winding. As a result, a rush current is generated between the stator winding of the motor and the bridge arm midpoint of the power transistor of the inverter circuit, affecting normal running of the power transistor of the inverter circuit. In addition, it takes some time for the inverter circuit to start directly, so that a startup process has a specific delay. In this case, the control circuit 110 may first output a startup signal to control the inverter circuit to generate a startup voltage, and the startup voltage may offset the induced voltage of the stator winding of the motor. Under effect of the startup voltage, the rush current is weakened, the startup process of the inverter circuit no longer has rush effect, and a startup speed is greatly accelerated. Further, the control circuit 110 controls the inverter circuit to drive the motor to output the torque. Therefore, power performance and driving comfort of an electric vehicle can be improved.

In an embodiment, the control circuit may further send working information of the motor to the vehicle control unit. The working information includes but is not limited to the rotation speed of the motor, whether the motor is in an intelligent transistor cut-off mode (the intelligent transistor cut-off mode is a mode in which the control circuit can control the plurality of switching transistors in the inverter circuit to be cut off), whether the motor is in a transistor cut-off state (the transistor cut-off state means that the plurality of switching transistors in the inverter circuit are in the cut-off state), and the like.

The motor controller provided in this application can control, based on the torque signal and the rotation speed of the motor, the switching transistor in the inverter circuit to be cut off, to achieve effect of automatic transistor cut-off by the motor controller without manual intervention. This reduces energy consumption of the motor, helps reduce vehicle energy consumption, and improves vehicle endurance. In addition, when it is determined, based on the input signal, that the vehicle has the actual torque requirement, the switching transistor in the inverter circuit is quickly controlled to be conducted to output the alternating current to the motor, to meet the torque requirement of the driver and improve driving reliability and stability of the vehicle.

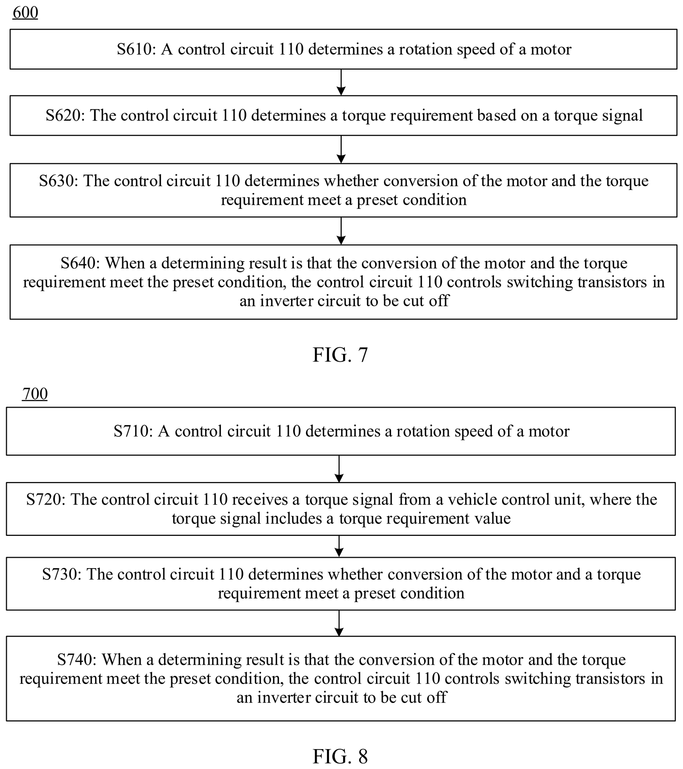

FIG. 7 is a schematic flowchart of an example of a control method 600 performed by the foregoing control circuit 110. As shown in FIG. 7, in S610, the control circuit 110 determines a rotation speed of a motor. For example, the control circuit 110 may determine the rotation speed based on a rotation speed signal indicating the rotation speed of the motor. The rotation speed signal may be sent by the rotation speed detection apparatus to the control circuit. Alternatively, the rotation speed signal may be sent by the vehicle control unit to the control circuit.

In S620, the control circuit 110 calculates a torque requirement. For example, the control circuit 110 may determine the torque requirement based on a brake signal or an accelerator signal. For example, a larger depth to which a brake pedal is stepped on indicates larger required negative torque. A larger depth to which an accelerator pedal is stepped on indicates larger required positive torque. Therefore, the brake signal or the accelerator signal may be related to a stepped-on depth of the pedal, and a torque requirement corresponding to the stepped-on depth of the pedal may be further restored based on the brake signal or the accelerator signal.

In S630, the control circuit 110 determines whether the rotation speed of the motor and the torque requirement meet a preset condition.

The preset condition is used to determine whether a driver needs the motor to output the torque, in other words, the preset condition is used to determine whether an alternating current needs to be output to the motor, so that the motor outputs the torque.

The preset condition includes:

Condition 1: The rotation speed of the motor is less than a first preset rotation speed value, and a positive torque requirement is less than a preset torque value.
Condition 2: The rotation speed of the motor is greater than a second preset rotation speed value, and an absolute value of a negative torque requirement is less than the preset torque value.

Specifically, when a determining result of the condition 1 is "yes", it may be considered that a vehicle is currently in an idle state, that is, the driver does not need the motor to output the torque. In this case, S640 is performed: The control circuit 110 controls a switch in the inverter circuit to be turned off, to stop supplying the alternating current to the motor.

When a determining result of the condition 1 is "yes", it may be considered that the vehicle is currently in a sliding state, and there is no braking feedback requirement, that is, the driver does not need the motor to output the torque. In this case, S640 is performed.

FIG. 8 is a schematic flowchart of another example of a control method 700 performed by the foregoing control circuit 110. A difference between the method shown in FIG. 8 and the method shown in FIG. 7 is that a torque requirement is determined by a vehicle control unit based on a brake signal, an accelerator signal, or the like, and the torque requirement value is sent to the control circuit 110 by using a torque signal. In addition, a method for determining the torque requirement by the vehicle control unit is similar to a method for determining the torque requirement by the control circuit 110. To avoid repetition, detailed description thereof is omitted herein.

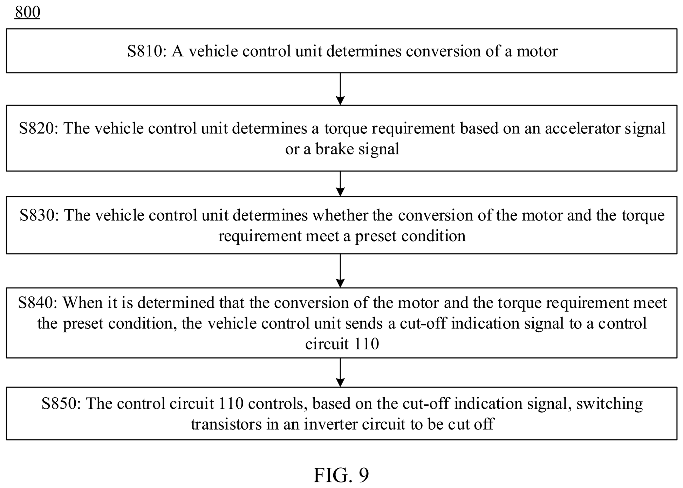

FIG. 9 is a schematic flowchart of another example of a control method 800 performed by the foregoing control circuit 110. A difference between the method shown in FIG. 9 and the method shown in FIG. 7 is that a torque requirement is determined by a vehicle control unit based on a brake signal, an accelerator signal, or the like, and a process of determining whether a rotation speed of a motor and a torque requirement meet a preset condition is performed by a vehicle signal. In addition, when determining, based on a determining result, that an alternating current needs to stop being supplied to the motor, the vehicle control unit sends a turn-off indication signal to the control circuit 110 in S840. The turn-off indication signal indicates the control circuit 110 to control a switch in an inverter circuit to be turned off. In S850, the control circuit 110 turns off the switch in the inverter circuit based on the turn-off indication signal, to stop supplying the alternating current to the motor.

In the several embodiments provided in this application, it should be understood that the disclosed systems, apparatuses, and methods may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A motor controller, wherein the motor controller comprises an inverter circuit and a control circuit, the inverter circuit comprises three switching transistor bridge arms, two ends of each switching transistor bridge arm are configured to receive power supplied by a power battery, a midpoint of each switching transistor bridge arm is configured to connect to a one-phase winding of three-phase windings of a motor, and the control circuit is configured to:

control, in response to that an absolute value of a torque requirement indicated by a torque signal is greater than or equal to a preset torque value, the inverter circuit to output a three-phase alternating current; and
control, in response to that a rotation speed of the motor is less than a first rotation speed value or greater than a second rotation speed value and that the absolute value of the torque requirement indicated by the torque signal is less than the preset torque value, a plurality of switching transistors in the inverter circuit to be cut off, wherein
the second rotation speed is greater than the first rotation speed.

2. The motor controller according to claim 1, wherein the control circuit is specifically configured to:
control, in response to that duration in which the rotation speed of the motor is less than the first rotation speed value is greater than first duration and duration in which the absolute value of the torque requirement indicated by the torque signal is less than the preset torque value is greater than second duration, the plurality of switching transistors to be cut off.

3. The motor controller according to claim 1, wherein the control circuit is specifically configured to:
control, in response to that duration in which the rotation speed of the motor is greater than the second rotation speed value is greater than third duration and duration in which the absolute value of the torque requirement indicated by the torque signal is less than the preset torque value is greater than second duration, the plurality of switching transistors to be cut off.

4. The motor controller according to any one of claims 1 to 3, wherein the control circuit is further configured to:
control, in response to that an absolute value of a change value of the rotation speed of the motor within preset time is greater than a preset rotation speed change value, the inverter circuit to output the three-phase alternating current.

5. The motor controller according to any one of claims 1 to 4, wherein the control circuit is further configured to:
control, in response to that the absolute value of the torque requirement indicated by the torque signal is greater than the preset torque value, the inverter circuit to output the three-phase alternating current.

6. The motor controller according to any one of claims 1 to 5, wherein the control circuit is further configured to:
receive an indication signal sent by a vehicle control unit, wherein the indication signal is used to inhibit the control circuit from controlling the plurality of switching transistors to be cut off or allow the control circuit to control the plurality of switching transistors to be cut off.

7. The motor controller according to any one of claims 1 to 6, wherein the control circuit is further configured to:
receive a rotation speed signal of the motor, wherein the rotation speed signal indicates the rotation speed of the motor.

8. The motor controller according to any one of claims 1 to 7, wherein the control circuit is further configured to:
receive an accelerator signal generated by triggering an accelerator pedal or a brake signal generated by triggering a brake pedal, wherein the accelerator signal and the brake signal are separately used to generate torque signals, and a direction of a torque requirement indicated by the torque signal corresponding to the accelerator signal is opposite to a direction of a torque requirement indicated by the torque signal corresponding to the brake signal.

9. The motor controller according to any one of claims 1 to 8, wherein a communication end of the control circuit is configured to: connect to electronic stability control, and receive a torque signal sent by the electronic stability control.

10. The motor controller according to any one of claims 1 to 9, wherein the communication end of the control circuit is configured to: connect to the vehicle control unit, and receive a torque signal sent by the vehicle control unit.

11. The motor controller according to any one of claims 1 to 10, wherein the communication end of the control circuit is configured to connect to the vehicle control unit, and the control circuit is configured to:
receive a vehicle driving status signal sent by the vehicle control unit, wherein the vehicle driving status signal is used by the control circuit to obtain the torque signal.

12. An electric drive system, wherein the electric drive system comprises the motor controller according to any one of claims 1 to 11 and a motor, wherein
the motor receives a three-phase alternating current from an inverter circuit.

13. A vehicle, wherein the vehicle comprises a power battery and the electric drive system according to claim 12, wherein
the power battery is connected to an input end of an inverter circuit.

FIG. 1

FIG. 2

FIG. 3

FIG. 4

FIG. 5

<u>500</u>

S501: Input a first signal

S502: Determine an actual torque requirement value

S503: Whether the torque requirement value is less than or equal to a preset value

No

Yes

S504: Control switching transistors in an inverter circuit to be cut off

S505: Input a second signal

S506: Determine the actual torque requirement value

S509: Send an actual torque signal of the motor

S507: Whether the torque requirement value is greater than the preset value

No

Yes

S508: Control the inverter circuit to output a current to a motor

FIG. 6

600

| S610: A control circuit 110 determines a rotation speed of a motor |

| S620: The control circuit 110 determines a torque requirement based on a torque signal |

| S630: The control circuit 110 determines whether conversion of the motor and the torque requirement meet a preset condition |

| S640: When a determining result is that the conversion of the motor and the torque requirement meet the preset condition, the control circuit 110 controls switching transistors in an inverter circuit to be cut off |

FIG. 7

700

| S710: A control circuit 110 determines a rotation speed of a motor |

| S720: The control circuit 110 receives a torque signal from a vehicle control unit, where the torque signal includes a torque requirement value |

| S730: The control circuit 110 determines whether conversion of the motor and a torque requirement meet a preset condition |

| S740: When a determining result is that the conversion of the motor and the torque requirement meet the preset condition, the control circuit 110 controls switching transistors in an inverter circuit to be cut off |

FIG. 8

800

| S810: A vehicle control unit determines conversion of a motor |

| S820: The vehicle control unit determines a torque requirement based on an accelerator signal or a brake signal |

| S830: The vehicle control unit determines whether the conversion of the motor and the torque requirement meet a preset condition |

| S840: When it is determined that the conversion of the motor and the torque requirement meet the preset condition, the vehicle control unit sends a cut-off indication signal to a control circuit 110 |

| S850: The control circuit 110 controls, based on the cut-off indication signal, switching transistors in an inverter circuit to be cut off |

FIG. 9

## INTERNATIONAL SEARCH REPORT

| International application No. |
|---|
| **PCT/CN2024/079624** |

| A. | CLASSIFICATION OF SUBJECT MATTER |
|---|---|

B60L15/20(2006.01)i; B60L50/60(2019.01)i

According to International Patent Classification (IPC) or to both national classification and IPC

| B. | FIELDS SEARCHED |
|---|---|

Minimum documentation searched (classification system followed by classification symbols)

IPC:B60L,H02P,B60W

Documentation searched other than minimum documentation to the extent that such documents are included in the fields searched

Electronic data base consulted during the international search (name of data base and, where practicable, search terms used)

CNABS: CNTXT; VEN; CNKI: 车, 电机, 马达, 扭矩, 转矩, 转速, 输出, 关, 断, vehicle, motor, torque, speed, output, off

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117104019 A (HUAWEI DIGITAL POWER TECHNOLOGIES CO., LTD.) 24 November 2023 (2023-11-24)<br>claims 1-13 | 1-13 |
| Y | CN 114175495 A (HUAWEI DIGITAL POWER TECHNOLOGIES CO., LTD.) 11 March 2022 (2022-03-11)<br>description, paragraphs 0049-0099, and figures 1-7 | 1-13 |
| Y | CN 116080629 A (GREAT WALL MOTOR CO., LTD.) 09 May 2023 (2023-05-09)<br>description, paragraphs 0064-0119, and figures 1-7 | 1-13 |
| Y | CN 114670671 A (BEIJING ELECTRIC VEHICLE CO., LTD.) 28 June 2022 (2022-06-28)<br>description, paragraphs 0069-0144, and figures 1-2 | 1-13 |
| A | CN 103434415 A (ZHEJIANG GEELY AUTOMOBILE RESEARCH INSTITUTE CO., LTD. et al.) 11 December 2013 (2013-12-11)<br>entire document | 1-13 |
| A | CN 112297876 A (HEFEI JEE POWER SYSTEMS CO., LTD.) 02 February 2021 (2021-02-02)<br>entire document | 1-13 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 May 2024** | **06 June 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/079624** |

**C.    DOCUMENTS CONSIDERED TO BE RELEVANT**

| Category* | Citation of document, with indication, where appropriate, of the relevant passages | Relevant to claim No. |
|---|---|---|
| A | CN 115580201 A (HUAWEI DIGITAL ENERGY TECHNOLOGY CO., LTD.) 06 January 2023 (2023-01-06)<br>    entire document | 1-13 |
| A | JP 2023077067 A (TOYOTA MOTOR CORP.) 05 June 2023 (2023-06-05)<br>    entire document | 1-13 |

Form PCT/ISA/210 (second sheet) (July 2022)

**INTERNATIONAL SEARCH REPORT**
Information on patent family members

International application No.

**PCT/CN2024/079624**

| Patent document cited in search report | | | Publication date (day/month/year) | Patent family member(s) | Publication date (day/month/year) |
|---|---|---|---|---|---|
| CN | 117104019 | A | 24 November 2023 | None | |
| CN | 114175495 | A | 11 March 2022 | None | |
| CN | 116080629 | A | 09 May 2023 | None | |
| CN | 114670671 | A | 28 June 2022 | None | |
| CN | 103434415 | A | 11 December 2013 | None | |
| CN | 112297876 | A | 02 February 2021 | None | |
| CN | 115580201 | A | 06 January 2023 | None | |
| JP | 2023077067 | A | 05 June 2023 | None | |

Form PCT/ISA/210 (patent family annex) (July 2022)

**EP 4 725 746 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311091876